(19) Europäisches Patentamt
European Patent Office
Office européen des brevets

(11) EP 3 629 463 A1

(12) EUROPÄISCHE PATENTANMELDUNG

(43) Veröffentlichungstag:
01.04.2020 Patentblatt 2020/14

(51) Int Cl.:
*H02M 3/335* (2006.01)   *H02M 1/00* (2006.01)

(21) Anmeldenummer: 18197164.9

(22) Anmeldetag: 27.09.2018

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Lutze, Marcel**
**90459 Nürnberg (DE)**
• **Pfeifer, Markus**
**90455 Nürnberg (DE)**

(54) **RESONANTER GLEICHSPANNUNGSSTELLER**

(57)    Die Erfindung betrifft einen Gleichspannungssteller (1), aufweisend einen Wechselrichter (10), einen Gleichrichter (11) und einen Wechselspannungszwischenkreis (12) mit Transformator (13). Zur Verbesserung des Gleichspannungswandlers wird vorgeschlagen, dass der Gleichspannungswandler einen induktiven Gleichspannungswandler (14) umfasst, wobei der Wechselspannungszwischenkreis (12) einen Resonanzkreis (15) aufweist, dessen Induktivität im Wesentlichen aus der Streuinduktivität des Transformators (13) und der Induktivität des induktiven Stromwandlers (14) gebildet wird. Ferner betrifft die Erfindung ein Verfahren zum Betreiben eines derartigen Gleichspannungsstellers (1), wobei Halbleiter des Wechselrichters (10) derart geschaltet werden, dass aus einer Eingangsspannung ($U_{ein}$) am Wechselrichter (10) eine vorgebbare Ausgangsspannung ($U_{aus}$) erzeugt wird, wobei die Halbleiter zumindest zeitweise periodisch mit der Eigenfrequenz des Resonanzkreises (15) geschaltet werden.

FIG 2

EP 3 629 463 A1

## Beschreibung

Die Erfindung betrifft einen Gleichspannungssteller, aufweisend einen Wechselrichter, einen Gleichrichter und einen Wechselspannungszwischenkreis mit Transformator. Ferner betrifft die Erfindung ein Verfahren zum Betreiben eines derartigen Gleichspannungsstellers.

Bei resonanten Gleichspannungssteller, auch als DC-DC Wandler oder Gleichstromsteller bezeichnet, mit Transformator wird idealerweise allein die Streuinduktivität des Transformators genutzt, um die Induktivität, auch als Resonanzinduktivität bezeichnet, des Resonanzkreises zu bilden. Der Resonanzkreis wird aus Resonanzinduktivität und Resonanzkapazität gebildet. Da die Streuinduktivität des Transformators zu gering ist, müssen externe Serieninduktivitäten, insbesondere als Drosseln, hinzugefügt werden. Diese Serieninduktivitäten vergrößern jedoch den Bauraum des DC-DC Wandlers.

Um den Bauraum des DC-DC Wandlers zu reduzieren, werden heutzutage die Komponenten der externen Serieninduktivitäten so optimiert, dass sie im Bauraum möglichst klein sind und damit geringe Bauelementekosten entstehen.

Der Erfindung liegt die Aufgabe zugrunde, einen Gleichspannungssteller zu verbessern.

Diese Aufgabe wird durch einen Gleichspannungssteller, aufweisend einen Wechselrichter, einen Gleichrichter, einen Wechselspannungszwischenkreis mit Transformator und einen induktiven Stromwandler gelöst, wobei der Wechselspannungszwischenkreis einen Resonanzkreis aufweist, dessen Induktivität im Wesentlichen aus der Streuinduktivität des Transformators und der Induktivität des induktiven Stromwandlers gebildet wird. Ferner wird die Erfindung durch ein Verfahren zum Betreiben eines derartigen Gleichspannungsstellers gelöst, wobei Halbleiter des Wechselrichters derart geschaltet werden, dass aus einer Eingangsspannung am Wechselrichter eine vorgebbare Ausgangsspannung erzeugt wird, wobei die Halbleiter zumindest zeitweise periodisch mit der Eigenfrequenz des Resonanzkreises geschaltet werden.

Vorteilhafte Ausgestaltungen der Erfindung sind in den abhängigen Ansprüchen angegeben.

Der Erfindung liegt die Erkenntnis zugrunde, dass der Bauraum des Gleichspannungsstellers dadurch reduziert werden kann, dass eine Strommessung im Wechselspannungszwischenkreis durchgeführt wird und für diese Strommessung ein Stromwandler mit induktivem Verhalten zum Einsatz kommt. Dieser Stromwandler wird auch als induktiver Stromwandler bezeichnet. Dieser kann beispielsweise einen Messtransformator aufweisen, dessen Streuinduktivität, also Induktivität, zur Resonanzinduktivität beiträgt. Damit wird die Induktivität des Resonanzkreises im Wesentlichen durch die Streuinduktivität des Transformators und die Induktivität des induktiven Stromwandlers gebildet. Im Wesentlichen bedeutet, dass auch eine nicht vermeidbare, parasitäre Induktivität der Verkabelung oder Verschienung zur Resonanzinduktivität hinzukommt, die jedoch von der Größenordnung her vernachlässigbar ist. Auf zusätzlich eingebrachte Induktivitäten, beispielsweise durch Einbringen einer Drossel kann verzichtet werden. Der Resonanzkondensator wird somit alleine auf die Induktivitäten von Stromwandler und Transformator abgestimmt. Dabei gilt der für die Kapazität des Resonanzkondensators der Zusammenhang

$$C = \frac{1}{\omega_0^2 \cdot L}$$

wobei die Induktivität L der Summe von Streuinduktivität des Transformators und der Induktivität des induktiven Stromwandlers entspricht. Durch den Verzicht auf eine Drossel ist der Bauraum des vorgeschlagenen resonanten Gleichspannungsstellers besonders klein und kostengünstig.

Bei einer vorteilhaften Ausgestaltung der Erfindung ist der Wechselspannungszwischenkreis drosselfrei ausgebildet. Die Möglichkeit, auf die Drossel zu verzichten, spart erheblichen Bauraum und Gewicht für den resonanten Gleichspannungssteller. Damit kann ein kompakter und kostengünstiger Aufbau realisiert werden.

Bei einer weiteren vorteilhaften Ausgestaltung der Erfindung wird der Resonanzkreis im Wesentlichen aus der Streuinduktivität des Transformators, der Induktivität des induktiven Stromwandlers und eines Resonanzkondensators gebildet. Im Wesentlichen bedeutet, dass keine weiteren Bauelemente zu der Induktivität beitragen. Allerdings sind neben der Streuinduktivität des Transformators, der Induktivität des induktiven Stromwandlers und eines Resonanzkondensators noch parasitäre Anteile von den Kabeln bzw. der Verschienung vorhanden, sowohl induktiv als auch kapazitiv, die sich aus dem Aufbau ergeben und nicht verhindert werden können. Auf den Einsatz weiterer Bauelemente, die das Gewicht erhöhen kann verzichtet werden, so dass sich ein kompakter und kostengünstiger Aufbau ergibt.

Bei einer weiteren vorteilhaften Ausgestaltung der Erfindung ist der Resonanzkreis sowohl zwischen Wechselrichter und Transformator als auch zwischen Gleichrichter und Transformator angeordnet. Um sich einen weiteren Freiheitsgrad beim Aufbau des Gleichspannungsstellers zu verschaffen, kann der Resonanzkreis auf beide Seiten des Transformators verteilt werden. Damit ist der Gleichspannungssteller leichter an seine Umgebung anpassbar oder in andere Komponenten integrierbar. Bei der Verwendung von zwei induktiven Stromwandlern lässt sich die Induktivität des Resonanzkreises auf einfache Weise weiter erhöhen.

Im Folgenden wird die Erfindung anhand der in den Figuren angegebenen Ausführungsbeispiele näher beschreiben und erläutert. Es zeigen:

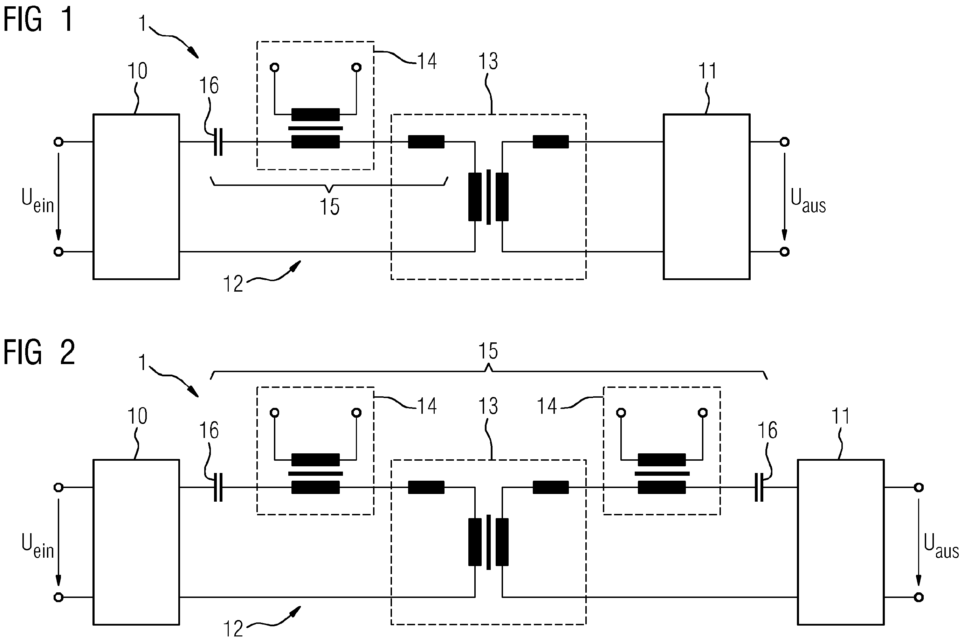

FIG 1, FIG 2    Ausführungsbeispiele eines Gleichspannungsstellers

Die FIG 1 zeigt ein erstes Ausführungsbeispiel eines Gleichspannungsstellers 1. Dieser wandelt eine Eingangsspannung $U_{ein}$ in eine vorgebbare Ausgangsspannung $U_{aus}$ um. Eingangsspannung und Ausgangsspannung des Gleichspannungsstellers 1 sind Gleichspannungen. Dazu wird ein Wechselrichter 10 und ein Gleichrichter 11 verwendet, die wechselspannungsseitig über einen Wechselspannungszwischenkreis 12 gekoppelt sind. Der Wechselspannungszwischenkreis weist einen Transformator 13 auf, der unter anderen den Eingang und den Ausgang des Gleichspannungsstellers 1 galvanisch voneinander trennt. Neben dem Transformator 13 ist in Reihe ein Resonanzkreis 15 angeordnet. Dieser weist neben dem Resonanzkondensator 16 Induktivitäten auf, die durch die Streuinduktivität des Transformators 13 und der Induktivität des induktiven Stromwandlers 14 gebildet werden. Dieser Resonanzkreis 15 erlaubt es dem Wechselrichter 10, mit geringen Verlusten zu schalten, da Schaltverluste von im Wechselrichter befindlichen Halbleitern vermieden oder zumindest deutlich reduziert werden können.

Die FIG 2 zeigt ein zweites Ausführungsbeispiel eines Gleichspannungsstellers 1. Zur Vermeidung von Wiederholungen wird auf die FIG 1 sowie auf die dort eingeführten Bezugszeichen verwiesen. Im Unterschied zur FIG 1 verteilt sich der Resonanzkreis 15 auf beide Seiten des Transformators 13. Dafür sind dann zwei Resonanzkondensatoren 16 und/oder zwei induktive Stromwandler 14 erforderlich. Alternativ zu der Darstellung ist es auch möglich, den Resonanzkondensator 16 oder den induktiven Stromwandler 14 nur ein Mal vorzusehen. Mit dieser Schaltung erhöht sich damit im Vergleich zur FIG 1 die Flexibilität und Anpassbarkeit der Schaltung, da bei der verteilten Anordnung auf beide Seiten des Transformators 13 der einzelnen Bauelemente ein größerer Freiheitsgrad entsteht.

Zusammenfassend betrifft die Erfindung einen Gleichspannungssteller, aufweisend einen Wechselrichter, einen Gleichrichter und einen Wechselspannungszwischenkreis mit Transformator. Zur Verbesserung des Gleichspannungswandlers wird vorgeschlagen, dass der Gleichspannungswandler einen induktiven Gleichspannungswandler umfasst, wobei der Wechselspannungszwischenkreis einen Resonanzkreis aufweist, dessen Induktivität im Wesentlichen aus der Streuinduktivität des Transformators und der Induktivität des induktiven Stromwandlers gebildet wird. Ferner betrifft die Erfindung ein Verfahren zum Betreiben eines derartigen Gleichspannungsstellers, wobei Halbleiter des Wechselrichters derart geschaltet werden, dass aus einer Eingangsspannung am Wechselrichter eine vorgebbare Ausgangsspannung erzeugt wird, wobei die Halbleiter zumindest zeitweise periodisch mit der Eigenfrequenz des Resonanzkreises geschaltet werden.

**Patentansprüche**

1.  Gleichspannungssteller (1), aufweisend

    - einen Wechselrichter (10)
    - einen Gleichrichter (11)
    - einen Wechselspannungszwischenkreis (12) mit Transformator (13) und
    - einen induktiven Stromwandler (14),

    wobei der Wechselspannungszwischenkreis (12) einen Resonanzkreis (15) aufweist, dessen Induktivität im Wesentlichen aus der Streuinduktivität des Transformators (13) und der Induktivität des induktiven Stromwandlers (14) gebildet wird.

2.  Gleichspannungssteller (1) nach Anspruch 1, wobei der Wechselspannungszwischenkreis (12) drosselfrei ausgebildet ist.

3.  Gleichspannungssteller (1) nach einem der Ansprüche 1 oder 2, wobei der Resonanzkreis (15) im Wesentlichen aus der Streuinduktivität des Transformators (13), der Induktivität des induktiven Stromwandlers (14) und eines Resonanzkondensators (16) gebildet wird.

4.  Gleichspannungssteller (1) nach einem der Ansprüche 1 bis 3, wobei der Resonanzkreis (15) sowohl zwischen Wechselrichter (10) und Transformator (13) als auch zwischen Gleichrichter (11) und Transformator (13) angeordnet ist.

5.  Verfahren zum Betreiben eines Gleichspannungsstellers (1) nach einem der Ansprüche 1 bis 4, wobei Halbleiter des Wechselrichters (10) derart geschaltet werden, dass aus einer Eingangsspannung ($U_{ein}$) am Wechselrichter (10) eine vorgebbare Ausgangsspannung ($U_{aus}$) erzeugt wird, wobei die Halbleiter zumindest zeitweise periodisch mit der Eigenfrequenz des Resonanzkreises (15) geschaltet werden.

FIG 1

10   16   14   13   11

$U_{ein}$

15

12

$U_{aus}$

FIG 2

15

1   10   16   14   13   14   16   11

$U_{ein}$

12

$U_{aus}$

EP 3 629 463 A1

Europäisches
Patentamt

European
Patent Office

Office européen
des brevets

# EUROPÄISCHER RECHERCHENBERICHT

Nummer der Anmeldung

EP 18 19 7164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/228566 A1 (LIANG JIM-HUNG [TW]) 22. September 2011 (2011-09-22) * Absätze [0026], [0031], [0032]; Abbildungen 7,8 * | 1-5 | INV. H02M3/335 H02M1/00 |
| X | US 2015/124489 A1 (DAI HEPING [US] ET AL) 7. Mai 2015 (2015-05-07) | 1 | |
| A | * Absätze [0030], [0045], [0047]; Abbildungen 1-3 * | 2-5 | |
| X | EP 3 079 248 A1 (HUAWEI TECH CO LTD [CN]) 12. Oktober 2016 (2016-10-12) | 1 | |
| A | * Absätze [0026], [0029]; Abbildung 1 * | 2-5 | |
| A | US 2015/229225 A1 (JANG YUNGTAEK [US] ET AL) 13. August 2015 (2015-08-13) * Absätze [0012], [0037], [0038], [0041], [0045]; Abbildung 10 * | 1-5 | |

RECHERCHIERTE SACHGEBIETE (IPC)

H02M

Der vorliegende Recherchenbericht wurde für alle Patentansprüche erstellt

| Recherchenort | Abschlußdatum der Recherche | Prüfer |
|---|---|---|
| Den Haag | 20. März 2019 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 7164

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2019

| Im Recherchenbericht angeführtes Patentdokument | Datum der Veröffentlichung | Mitglied(er) der Patentfamilie | Datum der Veröffentlichung |
|---|---|---|---|
| US 2011228566 A1 | 22-09-2011 | JP 2011200094 A<br>TW 201134073 A<br>US 2011228566 A1 | 06-10-2011<br>01-10-2011<br>22-09-2011 |
| US 2015124489 A1 | 07-05-2015 | KEINE | |
| EP 3079248 A1 | 12-10-2016 | CN 104795984 A<br>EP 3079248 A1<br>US 2016329817 A1<br>WO 2015109862 A1 | 22-07-2015<br>12-10-2016<br>10-11-2016<br>30-07-2015 |
| US 2015229225 A1 | 13-08-2015 | KEINE | |

EPO FORM P0461

Für nähere Einzelheiten zu diesem Anhang : siehe Amtsblatt des Europäischen Patentamts, Nr.12/82